# EUROPEAN PATENT APPLICATION

(11) **EP 1 239 669 A2**
(43) Date of publication of application: **11.09.2002**
(21) Application number: 02005106.6
(22) Date of filing: 07.03.2002
(51) Int. Cl.: H04N 5/44

(54) **Video display resizing**

(30) Priority: 10.03.2001 GB 0105994
(71) Applicant: Pace Micro Technology PLC, Saltaire, Shipley, BD18 3LF (GB)
(72) Inventor: Hodgkinson, Andrew, Cambridge CB4 1JA (GB)
(74) Representative: Wood, Graham

(57) **Abstract**

The invention relates to the generation of a display on a display screen, such as that of a television set. The display includes an internet web page, selected for display by a user. The web page includes a display window for a video display generated from video data. The web page and video data are received by a broadcast data receiver connected to the display screen. In accordance with the invention the display window is provided of a predetermined size which is compared with the size of the video display to be shown at that time. If the video display will not fit into the display window, newly set dimensions are generated for the display window thereby allowing the video display to be shown in its entirety and without the need for cropping or any other editing features to be performed.

## Description

This invention relates to the resizing of a video display on a display screen.

Although the following description relates to a video display generated on a display screen connected to a broadcast data receiver (BDR), it will be appreciated by persons skilled in the art that the present invention can be used with any video content for display within a window on a display screen.

It is known to provide BDR's with a mechanism of allowing MPEG video to be embedded in web pages or display pages containing text on a display screen. For example, the web page may be used as an interface for a video-on-demand preview page where the user can view miniaturised previews of a number of videos which they can select and pay to watch. The video display is required to be scaled to a particular size to allow correct positioning of the video display relative to the text on the page. The scaled down video display can be added directly into a web page using a method commonly referred to as a "plug-in function". The "plug-in function" is a hardware or software module that adds a specific feature to a larger system.

A problem associated with embedding video display in a web page is the wide variety of possible shapes of the video display. For example, the width:height ratio (aspect ratio) of the video display can vary greatly, typically between 4:3 (normal screen display) and 16:9 (wide-screen display). However, in some cases the display screen can be even wider, such as 2.20:1 or include a compromise ratio, such as 14:9. Whilst a method of scaling down a standard size video display to fit into a web page is known using techniques such as cropping, i.e., cutting off parts of video that do not fit onto the display screen, and letterbox/pillarboxing, i.e., padding out the video display with black bars to allow the video to fit to the display screen, there is no current method available for embedding video displays into web pages when the video display is of a non-standard size.

It is therefore an aim of the present invention to provide a mechanism of resizing a wide variety of video displays to allow the video to be embedded in a web page or display page containing text.

According to a first aspect of the present invention there is provided A method of generating a video display as part of an internet web page display on a display screen, said video display being placed in the web page display using a web browser processor which launches a plug in function for the display page, the plug-in function generating a display window of a predetermined size for the locating of the video display and
characterised in that said method further includes the steps of the plug-in function instructing a video data de-coder to scale and fit the video data for the video display to fit into the display window, the video decoder comparing the predetermined display window size with the video display and confirming the display window size if compatible with the video display or informing the plug-in function and/or web browser of a new display window size required if the video display is an incorrect size for the predetermined display window size, the web browser relaying the web page, including the display window according to the newly set display window size, the web browser informing the plug-in function of the newly set display window size and the plug-in function instructing the video decoder to scale and fit the video display data to the newly set display window size.

The present invention therefore provides a method of embedding video content into a web page and allowing the window for the same to change size and/or shape whilst embedded in the page, to suit the required size for the video content.

In one embodiment the video decoder informs the plug-in function of a new suggested window size required to fit the video data and the plug-in function instructs the web browser to relay the web page including the plug-in function display window according to the newly set size. Preferably the video decoder informs the web browser directly to relay the page including the plug-in function of the newly set display window size.

Typically the data which is used to generate the video display is derived from an MPEG compliant live video data stream.

In order to efficiently manage the method of the invention it is preferred to incorporate a flagging mechanism which is provided to prevent the video decoder from continually repeating the loop of requesting a newly set window size each time the plug-in function requests scaling and fitting of the received video data. Preferably, the flagging mechanism is an HTML code incorporated into the web page which is generated with the newly set display window size such that when the HTML code is detected, the video decoder does not request a newly set display window size as it knows that the size has already been set with respect to the video data for that particular video display being shown in the display window.

Typically the web page is provided for display on a display screen connected to a broadcast data receiver. The video decoder is provided in the broadcast data receiver which forms part of a television system.

It should be appreciated that the video decoder can implement the method using either hardware or software or a combination of both.

Preferably the web page is provided for display on a display screen connected to a broadcast data receiver. The video decoder hardware and/or software is typically provided in the broadcast data receiver and the broadcast data receiver typically forms part of a television system.

According to a further aspect of the present invention there is provided a method of generating a video display as part of a displayed internet web page using a broadcast data receiver, said web page being displayed on a display screen connected to the broadcast data receiver, said video display being placed on the web page using a web browser which generates a plug-in function for the page, the plug-in function generating a display window of predetermined size for the video data and characterised in that said method further includes the steps of, the plug-in function instructing the video decoder in the broadcast data receiver to scale and fit the video data for the predetermined display window size, the video decoder hardware comparing the predetermined display window size with the video data and, if required, informing the plug-in function and/or web browser of a new window size required to fit the video data in the event that the video display is an incorrect fit for the predetermined display window size, the web browser relaying the web page including the plug-in function display window according to the newly set size, the web browser informing the plug-in function of the newly set size of display window and the plug-in function instructing the video decoder to scale and fit the video data for the video display to the newly set display size window size.

In one embodiment the video data is received by the broadcast data receiver as part of a stream of video, audio and auxiliary data received from a remote location via a broadcast data transmission system.

Typically the broadcast data receiver includes a telecommunication link via which access to the internet page to be displayed on the display screen is made.

Thus, in accordance with the invention the display on the display screen comprises an internet page generated from data received via a telecommunications link and a display window as part of said display incorporating video data received via a broadcast data transmission system.

Thus the present invention provides a window for a video display embedded in a web page, which can change shape within the page to allow best fit of different sizes of video display in the window. The text of other data on the page can flow around the window as it changes shape to fit the incoming video display.

An embodiment of the invention is now described with reference to the accompanying drawing wherein;

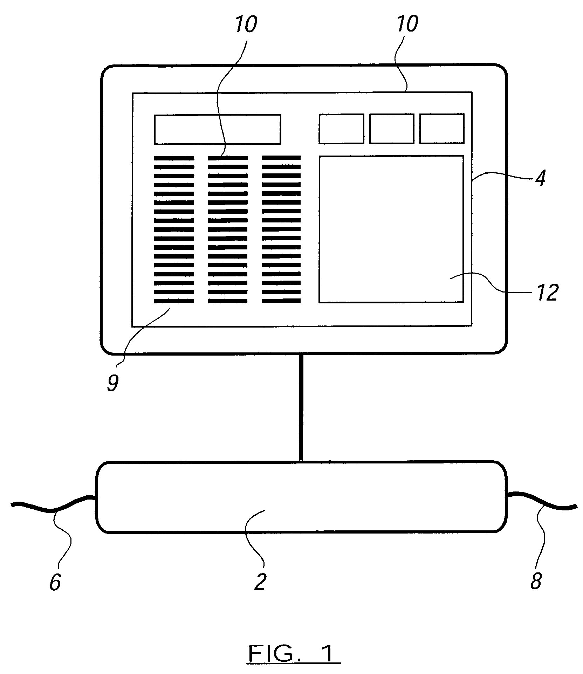

Figure 1 illustrates apparatus for use in accordance with the invention.

Referring firstly to Figure 1 there is illustrated a television and internet system in accordance wit the invention. The system apparatus includes a broadcast data receive 2 connected to a display screen 4, typically of a television set. The broadcast data receiver is provided with a connection 6 to receive data such as video audio and auxiliary data which is broadcast via a transmission system such as satellite, cable or terrestrial transmission systems. There is also provided a telecommunications connection 8 via which data can also be transmitted and such data can include data for the generation of internet web pages accessed via the connection 8 and in response to user selections.

One such internet web page 9 is shown displayed on the display screen 4 and said page includes areas of text and photographs 10 and a video display window 12 for the display of video. The video display is generated via a video decoder located within the broadcast data receiver. The method of generation of the video display and the sizing of the display 1indow 12 are now described.

The present invention provides a method of re-scaling a live MPEG video display with respect to its standard size (i.e. the size which would normally be generated when the video data for the same is decoded, and embedding the re-scaled video display into the display window 12 in the web page 9 for viewing on the display screen 4. When the broadcast data receiver receives digital data broadcast from a remote location via satellite/cable/terrestrial means and typically in a Motion Picture Experts Group (MPEG) format, it processes the data in the form of audio/video and/or auxiliary as appropriate.

The present invention includes control means for the MPEG video data decoder hardware ( video controller), a plug-in function allowing positioning and sizing of the video display on the web page and software for laying out the web page and displaying the page on a display screen (web browser).

The hardware and software required for the provision of the three components described above are typically provided in the broadcast data receiver.

In construction of a web page required to include a video display 12, the web page author includes appropriate tags, such as "OBJECT" or "EMBED" tags, in the HTML code for the page to cause the web browser to initiate a plug-in function for the video display. The web browser initiates a plug-in function display window of a predetermined size and at a pre-set location on the page. The predetermined size and location is typically provided in the HTML code for the page.

When the web page is selected for display the plug-in function is launched and instructs the video controller to scale and position the video display in the display window provided. A comparison is made to ascertain whether the video display will fit into the display window size. If it does the procedure continues as normal. However if, for whatever reason, the video display does not fit into the window provided, the video controller determines a new preferred window size which would fit the video display and informs the plug-in function of these newly set display window dimensions.

The plug-in function is unable to change the display window dimensions directly as it is embedded in a web page, and so instructs the web browser to re-lay the web page incorporating a plug-in function display window of the newly set size to allow the video display to be fitted therein.

The web browser informs the plug-in function of the newly set window size, allowing the plug-in function to once again scale and position the video display in the window. The video display now fits into the display window without loss of data/display or without using any other conventional picture cropping means.

To prevent a further message being sent back to the plug-in function from the video controller that the plug-in function window needs resizing again, a flagging mechanism can be incorporated into the system and a message is sent to the video controller to instruct the controller not to send a further resize value back to the plug-in function.

The video controller may not be able to fit the video display into the predetermined display window size due to limitations of the hardware and/or software which result in the correct scale factor being unobtainable. Alternatively the plug-in function display window 12 may not match the shape of the video display being embedded, for example, a 4:3 ratio sized display window will not accommodate a 16:9 display ratio video display. In addition, if the MPEG video data, when decoded in the hardware, is shown in a different graphics plane from the web page, the pixel aspect ratio of the graphics plane of the video display and the web page may not match.

The video controller need not always be instructed by the plug-in function to provide newly set display window dimensions to fit the video display. For example, the plug-in function may instruct the video controller to provide new dimensions to fit the height of the video display only into the window, to fit the width only, to fit both the height and width or that it does not matter whether the video display fits into the window at all. The video controller then provides the new window dimensions according to the instructions/constraints received from the plug-in function.

For example, if the plug-in function instructs the height of the video display to be maintained, the video controller may provide a new setting for the width of the display window due to the video display's aspect ratio being incorrect. If the plug-in function instructs the video controller that it does matter that the video display fits the display window then the controller provides newly set display window dimensions for both the width and height.

In some circumstances the web browser may not re-lay the web page using the preferred plug-in function window dimensions once instructed by the plug-in function. In addition, in the situation where the video display may change shape during playback of the video when embedded in the web page, such as in the case where a 4:3 programme is being played and advertisement breaks are played in 16:9, the video controller can inform the plug-in function of the change in shape of the video and the plug-in function can either choose to ignore this information or request the web browser to resize the display window.

A video display can comprise any video data providing the web browser is able to match the types of data that the plug-in function can handle. For example, the plug-in function can signal to the web browser that it is available and provides a list of the types of data it will handle, such as video/MPEG or video/MPEG-2 content types. The web browser matches this list to the type of data specified by the OBJECT or EMBED tags for the display window.

Thus the present invention provides a method of allowing a video display to change shape and/or size whilst embedded in a web page, such that the author of the web page no longer has to compromise on shape and size of the video content.

## Claims

1. A method of generating a video display as part of an internet web page display on a display screen, said video display being placed in the web page display using a web browser processor which launches a plug in function for the display page, the plug-in function generating a display window of a predetermined size for the locating of the video display and **characterised in that** said method further includes the steps of the plug-in function instructing a video data de-coder to scale and fit the video data for the video display to fit into the display window, the video decoder comparing the predetermined display window size with the video display and confirming the display window size if compatible with the video display or informing the plug-in function and/or web browser of a new display window size required if the video display is an incorrect size for the predetermined display window size, the web browser relaying the web page, including the display window according to the newly set display window size, the web browser informing the plug-in function of the newly set display window size and the plug-in function instructing the video decoder to scale and fit the video display data to the newly set display window size.

2. A method according to claim 1 **characterised in that** the video decoder informs the plug-in function of a new suggested window size required to fit the video data and the plug-in function instructs the web browser to relay the web page including the plug-in function display window according to the newly set size.

3. A method according to Claim 1 **characterised in that** the video decoder informs the web browser directly to relay the page including the plug-in function of the newly set display window size.

4. A method according to Claim 1 **characterised in that** the video display is generated from an MPEG compliant live video data stream.

5. A method according to Claim 1 **characterised in that** a flagging mechanism is provided to prevent the video decoder from continually repeating the loop of requesting a newly set window size each time the plug-in function requests scaling and fitting of the received video data.

6. A method according to claim 5 **characterised in that** the flagging mechanism is an HTML code incorporated into the web page which is .generated with the newly set display window size.

7. A method according to claim 1 **characterised in that** the web page is provided for display on a display screen connected to a broadcast data receiver.

8. A method according to claim 7 wherein the video decoder is provided in the broadcast data receiver which forms part of a television system.

9. A method of generating a video display in a web page using a broadcast data receiver, said web page being displayed on a display screen connected to the broadcast data receiver, said video display being placed on the web page using a web browser which generates a plug-in function for the page, the plug-in function generating a display window of predetermined size for the video data and **characterised in that** said method further includes the steps of, the plug-in function instructing the video decoder in the broadcast data receiver to scale and fit the video data for the predetermined display window size, the video decoder hardware comparing the predetermined display window size with the video data and, if required, informing the plug-in function and/or web browser of a new window size required to fit the video data in the event that the video display is an incorrect fit for the predetermined display window size, the web browser relaying the web page including the plug-in function display window according to the newly set size, the web browser informing the plug-in function of the newly set size of display window and the plug-in function instructing the video decoder to scale and fit the video data for the video display to the newly set display size window size.

10. A method according to claim 9 **characterised in that** the video data is received by the broadcast data receiver as part of a stream of video, audio and auxiliary data received from a remote location via a broadcast data transmission system.

11. A method according to claim 9 **characterised in that** the broadcast data receiver includes a telecommunication link via which access to the internet page to be displayed on the display screen is made.

12. A method according to claim 9 **characterised in that** the display on the display screen comprises an internet page generated from data received via a telecommunications link and a display window as part of said display incorporating video data received via a broadcast data transmission system.
